# EUROPÄISCHE PATENTANMELDUNG

(11) **EP 2 514 627 A1**
(43) Veröffentlichungstag der Anmeldung: **24.10.2012**
(21) Anmeldenummer: 11163192.5
(22) Anmeldetag: 20.04.2011
(51) Int. Cl.: B60L 11/18, H02M 7/487

(54) **Wechselrichteranordnung zum Laden der Batterie in einem Elektrofahrzeug und zum Rückspeisen in das öffentliche Netz**

(71) Anmelder: Siemens Aktiengesellschaft, 80333 München (DE)
(72) Erfinder: Demuth, Thomas, 09212 Limbach-Oberfrohna (DE)

(57) **Zusammenfassung**

Erfindungsgemäß wird eine Wechselrichteranordnung (1) für ein Elektrofahrzeug mit folgenden Merkmalen vorgeschlagen:
a) mit einem NPC-Wechselrichter (4),
b) mit einer oder mehreren Batterien (2), die mit den Gleichspannungsanschlüssen (5,6) des NPC-Wechselrichters (4) verbunden sind und
c) mit einem Drehstrommotor, dessen Wicklungen (10) an die Drehstromanschlüsse (U,V,W) des NPC-Wechselrichters (4) angeschlossen sind,
d) wobei der Neutralpunkt (7) auf der Gleichspannungsseite des NPC-Wechselrichters (4) durch ein Netzwerk oder durch mehrere Batterien (2) gebildet und mit dem Neutralleiter (N) eines Netzes (3) verbunden ist.

## Beschreibung

Die Erfindung betrifft eine Wechselrichteranordnung für ein Elektrofahrzeug.

Derartige Wechselrichteranordnungen, bei denen üblicherweise Zweipunkt-Wechselrichter angewandt werden, gehören zum Stand der Technik. Als Gleichspannungsquelle dient oder dienen eine oder mehrere Batterien, die in Abhängigkeit vom Schaltzustand des Wechselrichters, z.B. einer 6-Puls-Brückenschaltung, verschiedene Potenziale annehmen können. Der Wechselrichter arbeitet als Aktivgleichrichter. Es kann Energie aus dem Netz in die Batterie übertragen werden oder der Wechselrichter kann Energie aus der Batterie in das Netz speisen. Voraussetzung für diese Struktur ist, dass die Batteriespannung größer ist als der Scheitelwert der Netzspannung. Bei einer Netzspannung von 400 Veff muss die Batteriespannung größer als 570 V sein. Der Wechselrichter erzeugt den sinusförmigen Strom durch Anlegen einer unstetigen Spannung, indem der Wechselrichterausgang wechselseitig auf den Pluspol und den Minuspol der Batterie geschaltet wird. Durch die spannungsintegrierende Eigenschaft der Induktivität des Drehstrommotors am Wechselrichterausgang bleibt der Strom stetig im Verlauf.

Allerdings wird das Potenzial der Batterie durch das wechselseitige Schalten verändert. Dabei kann die maximal auftretende Differenzspannung zwischen zwei Phasen als Potenzialunterschied im Potenzial der Batterie auftreten. Zusätzlich können durch das Pulsen angeregte Resonanzen in der Motorinduktivität die Schwankungen des Potenzials der Batterie auf über 1.000 V verstärken. Die Potenzialverschiebungen erfolgen im periodisch-zeitlichen Verlauf der Pulsfrequenz, mit der die ersten Schaltelemente angesteuert werden. Die Frequenz kann in der Größenordnung von 2 bis 20 kHz liegen. Durch die interne Erdkapazität der Batterie entsteht als Folge der pulsfrequenten Potenzialverschiebungen ein Ableitstrom zur Erde, durch den die Batterie geschädigt werden kann. Aber auch in die Batterie integrierte Überwachungssysteme können durch die Potenzialschwankungen in ihrer Funktion gestört werden.

Daher liegt der Erfindung die Aufgabe zugrunde, eine Wechselrichteranordnung für ein Elektrofahrzeug anzugeben, die auf einfache Weise die Potenzialverschiebungen an einer oder mehreren Batterien des Elektrofahrzeugs verringert.

Die Aufgabe wird durch eine Wechselrichteranordnung mit den folgenden Merkmalen nach Anspruch 1 gelöst:
a) mit einem NPC-Wechselrichter,
b) mit einer oder mehreren Batterien, die mit den Gleichspannungsanschlüssen des NPC-Wechselrichters verbunden sind und
c) mit einem Drehstrommotor, dessen Wicklungen an die Drehstromanschlüsse des NPC-Wechselrichters angeschlossen ist,
d) wobei der Neutralpunkt auf der Gleichspannungsseite des NPC-Wechselrichters durch ein Netzwerk oder durch mehrere Batterien gebildet und mit dem Neutralleiter eines Netzes verbunden ist.

Eine vorteilhafte Weiterbildung der Erfindung besteht, wenn gemäß Anspruch 1,2 die Wicklungen des Drehstrommotors im Lade- und/oder Rückspeisebetrieb mit dem Netz verbunden sind und wenn die Motorwicklungen im Fahrbetrieb zu einem Sternpunkt geschlossen sind.

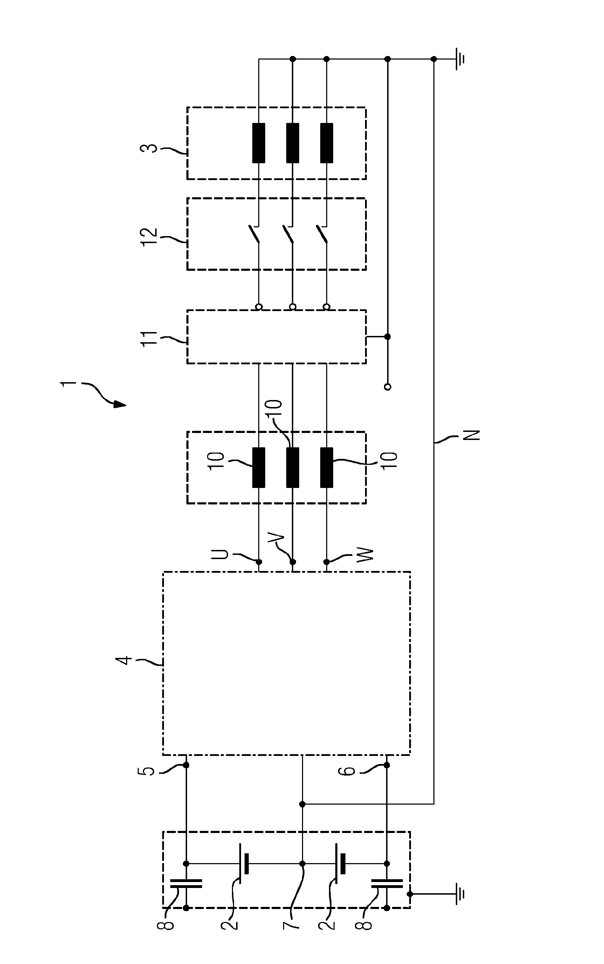

Ein Ausführungsbeispiel der Erfindung wird im Folgenden anhand einer Zeichnung näher erläutert. Die Zeichnung zeigt eine Wechselrichteranordnung 1 zum Laden einer Batterie oder mehrerer Batterien 2 im Elektrofahrzeug und zum Rückspeisen in ein öffentliches Netz 3. Der hierbei angewandte Wechselrichter 4 ist als Vollbrückenschaltung mit Abgriff am "Neutral-Punkt" (Neutral Point Clamped NPC) ausgeführt. Mit diesem NPC-Wechselrichter 4 lassen sich eine sehr gute Gleichspannungsunterdrückung und eine exzellente Umrichter-Effizienz erzielen. Ein weiterer Vorteil dieser Mehrstufenschaltungstopologie ist, dass hohe eingangsseitige DC-Spannungen mit Niederspannungsleistungshalbleitern beherrschbar sind.

Mit den Gleichspannungsanschlüssen 5,6 des NPC-Wechselrichters 4 sind hier zwei in Reihe geschaltete Batterien 2 gleicher Ausführung verbunden, in deren Verbindung der Abgriff zum Neutralpunkt 7 liegt. Es ist aber auch eine Ausführung mit nur einer Batterie 2 denkbar, wobei dann der Neutralpunkt 7 durch ein parallel liegendes Netzwerk, z.B. zwei in Reihe liegende Kondensatoren gleicher Ausführung, gebildet wird. Die Erdkapazitäten der Batterien 2 am Plus- und Minuspol auf der Gleichspannungsseite sind mit dem Bezugszeichen 8 gekennzeichnet.

An die Drehstromanschlüsse U,V,W des NPC-Wechselrichters 4 ist ein Drehstrommotor angeschlossen, dessen Wicklungen 10 über ein Netzfilter 11 und eine Ladesäule 12 mit dem Netz 3 verbunden sind. Das Netz 3 weist einen Neutralleiter N auf, der mit dem Neutralpunkt 7 verbunden ist. Die in der Zeichnung dargestellte Schaltungstopologie ist zum Laden der Batterien 2 im Elektrofahrzeug und zum Rückspeisen der in den Batterien 2 gespeicherten Energie in das Netz 3 besonders geeignet.

Im Fahrbetrieb sind die Wicklungen 10 des Drehstrommotors zu einem Sternpunkt geschlossen.

Da beim NPC-Wechselrichters 4 stets nur die Hälfte der an den Gleichspannungsanschlüssen liegenden Gleichspannung zu schalten ist, ist einerseits die Störaussendung sehr viel geringer als bei einem konventionellen Wechselrichter und andererseits ergeben sich nur geringste Potenzialverschiebungen beim Takten des Umrichters.

## Patentansprüche

1. Wechselrichteranordnung (1) für ein Elektrofahrzeug mit folgenden Merkmalen:
a) mit einem NPC-Wechselrichter (4),
b) mit einer oder mehreren Batterien (2), die mit den Gleichspannungsanschlüssen(5,6) des NPC-Wechselrichters (4) verbunden sind und
c) mit einem Drehstrommotor, dessen Wicklungen (10) an die Drehstromanschlüsse (U,V,W) des NPC-Wechselrichters (4) angeschlossen sind,
d) wobei der Neutralpunkt (7) auf der Gleichspannungsseite des NPC-Wechselrichters (4) durch ein Netzwerk oder durch mehrere Batterien (2) gebildet und mit dem Neutralleiter (N) eines Netzes (3) verbunden ist.

2. Wechselrichteranordnung nach Anspruch 1, **dadurch gekennzeichnet, dass** die Wicklungen (10) des Drehstrommotors im Lade- und/oder Rückspeisebetrieb mit dem Netz (3) verbunden sind.

3. Wechselrichteranordnung nach Anspruch 1 oder 2, **dadurch gekennzeichnet, dass** die Wicklungen (10) des Drehstrommotors im Fahrbetrieb zu einem Sternpunkt geschlossen sind.
